(19) Europäisches Patentamt European Patent Office Office européen des brevets

(11) EP 4 744 767 A1

(12) EUROPEAN PATENT APPLICATION

(43) Date of publication:
20.05.2026 Bulletin 2026/21

(21) Application number: 25215162.6

(22) Date of filing: 12.11.2025

(51) International Patent Classification (IPC):
B01J 19/12 (2006.01)

(52) Cooperative Patent Classification (CPC):
B01J 19/121

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 13.11.2024 PL 24025624

(71) Applicants:
• SIEC BADAWCZA LUKASIEWICZ - INSTYTUT
MIKROELEKTRONIKI I FOTONIKI
02-668 Warszawa (PL)

• Uniwersytet Jagiellonski
31-007 Krakow (PL)

(72) Inventors:
• Kwiecien, Karolina
31-640 Krakow (PL)
• Putyra, Piotr
31-589 Krakow (PL)
• Kaczor, Agnieszka
30-381 Krakow (PL)
• Skwarek - Illes, Agata
30-424 Krakow (PL)

(74) Representative: AOMB Polska Sp. z.o.o.
ul. Rondo Ignacego Daszynskiego 1
00-843 Warsaw (PL)

(54) **FLOW REACTOR FOR IN SITU TESTING OF CHEMICAL REACTIONS INVOLVING CHIRAL REAGENTS**

(57) The subject of the invention is a flow reactor for *in situ* investigation of chemical reactions involving chiral reagents, enabling integration with a Raman optical activity (ROA) spectrometer and an electronic circular dichroism (ECD) spectrometer.

The reactor comprises a body **1** and two clamping elements **2** and **3** positioned on opposite sides of the body **1.** The body contains two through-holes, preferably cylindrical, **A** and **B,** where the first hole **A** has a diameter of at least 2 mm and serves as the passage for the medium containing the chiral reagents, and the second hole **B,** with a diameter of at least 4 mm, serves as the passage for the laser beam and is positioned at an angle $\lambda$ = 85-90° relative to the first hole **A,** and also extends through the clamping elements **2** and **3.** Additionally, in hole **B,** on both sides of the space defined by hole **A,** there are recesses in which quartz plates are seated, the distance between the plates being 5 to 10 mm.

Fig 1

## Description

The subject of the invention is a flow reactor for the *in situ* investigation of chemical reactions involving chiral reagents, enabling integration with a Raman optical activity (ROA) spectrometer and an electronic circular dichroism (ECD) spectrometer.

Traditional methods for determining the enantiomeric excess (ee) of chiral compounds, including the most commonly used techniques, such as highperformance liquid chromatography (HPLC) and gas chromatography (GC) are time-consuming, costly and require physical separation of the enantiomers. Although chiroptical spectroscopic techniques such as ROA and ECD enable the determination of optical purity and enantiomeric excess in solution, they are rarely used for monitoring reaction progress which limits their practical applicability. In the pharmaceutical industry there is a need for precise control of chemical reactions involving chiral reagents in solution, without enantiomer separation, in particular for the analysis of the enantiomeric purity of chiral reagents. A measure of enantiomeric purity is the enantiomeric excess (ee), which can be defined as:

$$ee = \frac{|[R] - [S]|}{[R] + [S]} \cdot 100\%$$

where: [R], [S]- molar concentrations of the R and S enantiomers in the mixture.

Enantiomeric (optical) purity is highly relevant because enantiomers of an active pharmaceutical ingredient (API) usually have different biological activity, bioavailability, and side effects. In some cases, enantiomers may have completely different biological effects - one may be therapeutic whereas the other may be inactive or even harmful. Therefore, *in situ* control of the optical purity of an API in solution is beneficial in the context of the safety and effectiveness of the therapeutic process.

The publication by Nafie A., et al., Anal. Chem., 2004, 76, 6956-6966 and patent EP1685386A4 disclose solutions that employ a flow reactor for the investigation and real-time monitoring of ee of chiral compounds without the need for spectral scanning, using Fourier-transform vibrational circular dichroism (FT-VCD). It has been demonstrated that combining this technology with flow systems and applying chemometric analysis methods, such as partial least squares (PLS), enables precise tracking of changes in ee for one or several substances with an accuracy of 1-2%.

The US10660557B2 patent discloses a flow reactor whose design enables precise optical measurements in flow chambers constructed with transparent window elements, which allow for high quality optical measurements. The application WO2019193346A1 and the patent US11169084B2 disclose modular flow reactors which can be integrated with analytical systems, offering various configuration options for efficient fluid flow.

The patent WO2019197582 discloses a 3D printing technology that can be used for building elements of a flow reactor. In the described technology, the advantages of materials such as polypropylene were utilized, along with the design flexibility offered by 3D printing.

Current technologies for the development of such reactors focus on adjustable flow characteristics and on integration with advanced spectroscopic techniques, in particular on improving compatibility with ROA and ECD methods.

The objective of the invention is to provide a flow reactor design that can be integrated with a chiroptical spectrometer such as ROA or ECD, and that enables the control of chemical reactions involving chiral reagents, as well as the determination of ee based on *in situ* measurements in solutions.

The reactor according to the invention has a body and two clamping elements on opposite sides of the body. The reactor body contains two through-holes, preferably cylindrical, wherein the first hole has a diameter of at least 2 mm through which the tested medium containing chiral reagents flows, whereas the second hole, with a diameter of at least 4 mm, is intended for guiding a laser beam. The second hole is positioned at an angle λ = 85-90° relative to the first hole and also passes through the clamping elements. Moreover, in the second hole, on both sides of the space defined by the intersecting holes, there are recesses in which seals and quartz plates are seated, wherein the distance between the quartz plates is from 5 to 10 mm. Preferably, the quartz plates have a diameter from 10 to 15 mm and a thickness of 0.5 mm ± 0.15 mm, and are seated in the recesses of the second hole between the seals on one side and the clamping elements on the other side, the pressing elements being pressed against the body by means of screws. The seals may be made of silicone materials having a hardness in the range of 35-70 Shore A, such as NBR, FKM, or EPDM, or alternatively of polytetrafluoroethylene (PTFE).

The reactor according to the invention is a research tool that enables the analysis of chemical reactions involving chiral reagents in solution without the need to separate enantiomers, in particular the analysis of the enantiomeric purity of chiral reagents by determining the ee based on the analysis of band intensities in chiroptical spectra, in particular ROA and ECD. It is a universal reactor whose design allows it to be integrated with measuring instruments such as an ROA spectrometer or ECD spectrometer. ECD methods, and especially ROA, are characterized by very high sensitivity in studies of molecular structure and stereostructure. The reactor enables the determination of optical purity for multiple chiral reagents present in a mixture on the basis of a single measurement, referenced to measurements of enantiomerically pure compounds. Furthermore, the design of the reactor allows it to be connected to *in-line* type systems.

It should be emphasized that the reactor's design has improved the repeatability and reliability of measurements by eliminating issues associated with manual mixing and maintaining constant measurement conditions. The fact that the sample is introduced directly into the reactor, which forms part of the measurement system, minimizes artifacts related to sample heterogeneity, thereby enhancing the accuracy of the analysis.

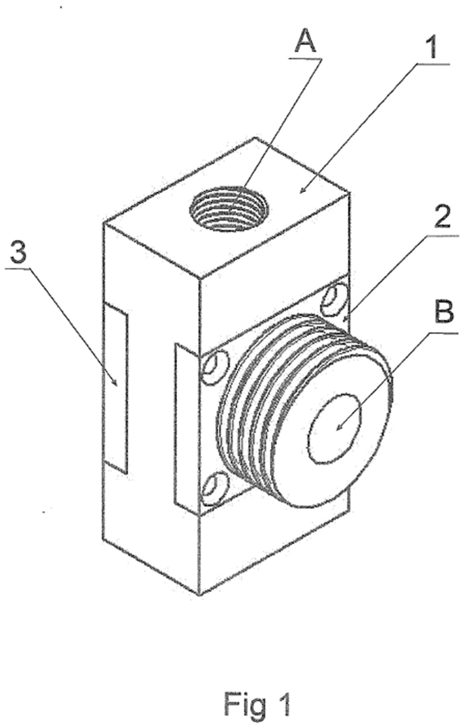

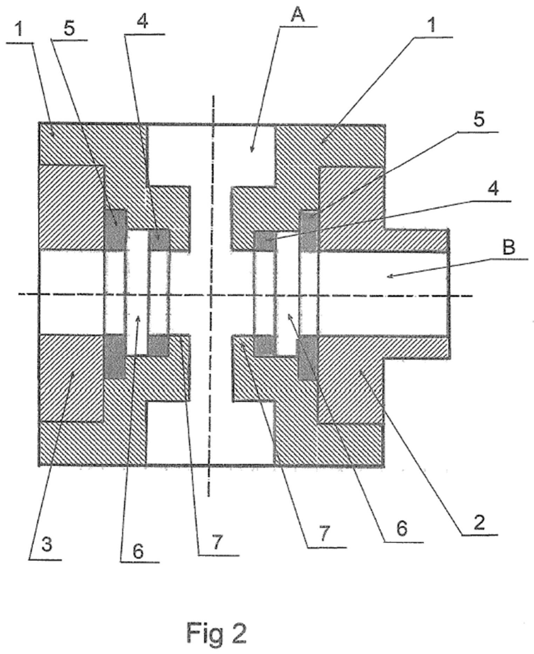

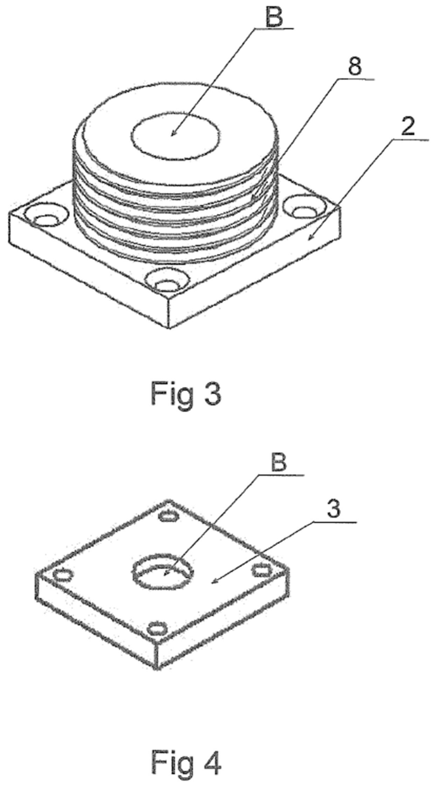

The invention will be explained in more detail using the example of a reactor adapted for use with an ROA spectrometer, as shown in the figures. Fig. 1 presents a view of the reactor. Fig. 2 shows the reactor in cross-section. Fig. 3 illustrates one clamping and sealing element pressing the first glass plate to the body, equipped with an externally threaded connector enabling attachment to the spectrometer, and Fig. 4 shows the second clamping and sealing element that secures the second glass element to the body.

This reactor consists of three basic components: the body *1* and two clamping and sealing elements *2* and *3*. The body *1* of the illustrative reactor has the shape of a rectangular cuboid, which on two opposite longer sides is provided with undercuts for seating the clamping and sealing elements 2 and 3. Inside the body 1, there are two through-holes A and B that intersect at a right angle. The space defined by the intersecting holes forms the region in which the analysis of the medium containing chiral reagents is carried out. Hole A runs along the vertical axis of the body. The diameter of this hole is variable and, in the central portion (closer to the analyzed region), is 2 mm. At the inlet and outlet of the reactor, hole A is threaded, which allows connection of flexible tubing for supplying and removing the analyzed medium. Hole B, with a diameter of 4 mm, runs along the horizontal axis of the body through the walls containing the undercuts for the clamping elements 2 and 3, and then through these clamping elements themselves. Through hole B, a laser light beam is introduced into the analysis region of the reactor. Furthermore, in hole B, on both sides of the analyzed region, there are recesses in which quartz plates 6 are positioned between seals or spacers 4 and 5 at a distance of 8 mm from each other. These plates have a diameter of 12 mm, a thickness of 0.5 mm, and are made of JGS 1-grade quartz glass, free from impurities and inclusions. The spacers retaining the plates 6 are made of an elastomer (NBR), but may also be made of polytetrafluoroethylene (PTFE). The seals 4 located on the side of the analyzed region are arranged in positioning recesses in hole B defined by projections 7, while the spacers 5 located on the opposite side of the quartz plate 6 are pressed against the plate 6 by the clamping elements 2 and 3.

One quartz plate 6 is pressed against the body 1 and sealed by means of the clamping element 2, which has a threaded connector 8 enabling attachment to the socket of the ROA spectrometer holder. Element 2 is fastened to the reactor body using four screws. The connector 8 of this clamping element allows integration of the reactor with the ROA spectrometer. The other plate 6 is sealed by means of the clamping element 3, which has, in its central part, an opening that forms a continuation of hole B in the body 1, and which is also fastened to the body 1 using four screws.

In this design, the tested solution is introduced into hole A using tubing and a peristaltic pump, and then flows through the reactor at a set flow rate within the range of 0.006-570 ml/min. Meanwhile, the laser beam from the ROA spectrometer is directed at the solution located in the region enclosed by the quartz plates 6, from which the measurement data are collected.

The proposed design enables the monitoring of chemical reactions involving chiral reagents, as well as the determination of ee based on *in situ* measurements in solution. In particular, when the reactor is integrated with an ROA spectrometer, the combination of stereospecificity and the very high sensitivity of ROA spectroscopy to molecular structure allows the optical purity of multiple chiral reagents in a mixture to be determined from a single measurement referenced to measurements of enantiomerically pure compounds. This reactor is also designed to be connected to *in-line* systems, and the analysis can be carried out directly in aqueous solutions. Another advantage of this reactor is that it can be manufactured using 3D-printing technology from transparent components, which significantly reduces production costs, allows continuous monitoring, and provides convenient visual observation of sample flow. Thanks to 3D-printing technology, optimization of measurement parameters becomes much simpler, more cost-effective, and faster. This enables easy adjustment of such elements as optical path length, reactor volume (amount of the tested solution), and the size of the measurement aperture. As a result, the amount of the tested material can be flexibly regulated, allowing precise adaptation of the reactor to specific analytical requirements.

**Claims**

1. A flow reactor for *in situ* investigation of chemical reactions involving chiral reagents, **characterized in that** it comprises a body (1) and two clamping elements (2) and (3) positioned on opposite sides of the body (1), wherein the body contains two through-holes, preferably cylindrical, A and B, the first hole (A) having a diameter of at least 2 mm through which the medium containing the chiral reagents flows, and the second hole (B) having a diameter of at least 4 mm, serving as a passage for a laser beam and being positioned at an angle $\lambda = 85-90°$ relative to the first hole (A), and further extending through the clamping elements (2) and (3); wherein, furthermore, in the second hole (B), on both sides of a space defined by the intersecting holes (A) and (B), there are recesses in which seals (4) and (5) and quartz plates (6) are seated, the distance between the quartz plates being from 5 to 10 mm.

2.  The reactor according to claim 1, **characterized in that** the quartz plates (6) have a diameter from 10 to 15 mm and a thickness of 0.5 mm $\pm$ 0.15 mm, and are mounted in the recesses of the hole (B) between the seals (4) and (5) on one side and the clamping elements (2) and (3) on the other side, the clamping elements being pressed against the body (1) by means of screws.

3.  The reactor according to claims 1 and 2, **characterized in that** the seals (4) and (5) are made of a silicone material having a hardness in the range of 35-70 Shore A, such as NBR, FKM, or EPDM, or alternatively of PTFE.

Fig 1

Fig 2

Fig 3

Fig 4

Europäisches
Patentamt

European
Patent Office

Office européen
des brevets

**EUROPEAN SEARCH REPORT**

**Application Number**

**EP 25 21 5162**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2002 050817 A (LASER ATOM SEPARATION ENG RES; TOSHIBA CORP; TOSHIBA ELECTRONIC ENG) 15 February 2002 (2002-02-15)<br>* abstract *<br>* paragraph [0002] *<br>* paragraph [0016] - paragraph [0017]; figure 2 *<br>----- | 1-3 | INV.<br>B01J19/12 |
| A | JP H06 302918 A (LASER NOSHUKU GIJUTSU KENKYU; TOSHIBA CORP)<br>28 October 1994 (1994-10-28)<br>* abstract; figure 1 *<br>----- | 1-3 | |
| A | JP 2001 144359 A (MITSUBISHI ELECTRIC CORP; LASER ATOM SEPARATION ENG RES)<br>25 May 2001 (2001-05-25)<br>* the whole document *<br>----- | 1-3 | |

**TECHNICAL FIELDS SEARCHED (IPC)**

B01J

The present search report has been drawn up for all claims

| Place of search | Date of completion of the search | Examiner |
|---|---|---|
| Munich | 20 March 2026 | Thomasson, Philippe |

EPO FORM 1503 03.82 (P04C01)

**EP 4 744 767 A1**

## ANNEX TO THE EUROPEAN SEARCH REPORT
## ON EUROPEAN PATENT APPLICATION NO.

EP 25 21 5162

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | | | Publication date | Patent family member(s) | Publication date |
|---|---|---|---|---|---|
| JP 2002050817 | A | | 15-02-2002 | NONE | |
| JP H06302918 | A | | 28-10-1994 | NONE | |
| JP 2001144359 | A | | 25-05-2001 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1685386 A4
- US 10660557 B2
- WO 2019193346 A1
- US 11169084 B2
- WO 2019197582 A

**Non-patent literature cited in the description**

- **NAFIE A et al.** *Anal. Chem.*, 2004, vol. 76, 6956-6966